# EUROPEAN PATENT SPECIFICATION

(11) **EP 1 322 874 B1**
(45) Date of publication and mention of the grant of the patent: **02.01.2008**
(21) Application number: 01977348.0
(22) Date of filing: 01.10.2001
(51) Int. Cl.: F16H 1/00

(54) **ACCESSORY AND MOTOR/GENERATOR BELT DRIVE TENSIONER**
SPANNVORRICHTUNG FÜR DEN RIEMENANTRIEB VON HILFSAGREGATEN UND DES MOTORS/GENERATORS
TENDEUR D'ENTRAINEMENT PAR COURROIE D'ACCESSOIRES ET DE MOTEUR/GENERATEUR

(30) Priority: 03.10.2000 US 237614 P
(43) Date of publication of application: 02.07.2003
(73) Proprietor: The Gates Corporation, Denver, CO 80202 (US)
(72) Inventor: ALI, Imtiaz, Rochester Hills, 48307-4165 (US); LIU, Keming, Sterling Height, MI 48314 (US); HANES, Dave, Troy, MI 48098 (US)
(74) Representative: James, Anthony Christopher W.P.
(86) International application number: PCT/US2001/030772
(87) International publication number: WO 2002/029279

(56) References cited:
- WO-A-00/77421
- DE-A- 4 243 451
- DE-A- 10 044 645
- DE-A- 19 849 659

## Description

### Background of the Invention

### Field of the Invention

This invention relates generally to internal combustion engine accessory belt drive systems each having a unitary device performing both the engine starting function and the electrical power generation function, such as a motor/generator sometimes referred to as a Gen-Star. More particularly, it relates to such systems in automotive applications. Specifically, this invention relates to a tensioner and a configuration for belt drive systems each having a motor/generator and each having a tensioner.

### Description of the Prior Art

Internal combustion engines commonly use power transmission belt drive systems to tap power from the engine's crankshaft and deliver it to one or more various engine auxiliaries or accessories. In automotive applications, these accessories include power steering pumps, water pumps, air conditioning compressors, fuel pumps, and alternators. Historically, such engines have had the main power takeoff point at the crankshaft protruding from the rear of the engine to which is attached the drive train for driving the wheels to move the automobile. The accessories are driven from a pulley attached to the front of the crankshaft. Each accessory is equipped with a pulley. All of the pulleys are in mechanical communication via one or more power transmission belts trained about them. Some method of tensioning each power transmission belt is provided. The power transmission belt, the pulleys, and devices accomplishing belt tensioning form the accessory belt drive system.

Earlier systems included multiple v-belts. Commonly, each belt was tensioned by manual adjustment and fixing of the position of one accessory or idler per belt. These are referred to as locked-center belt drives, because there is no provision for automatic movement of any of the pulleys to accommodate varying condition of the belt or of the drive as a whole. If the belt should stretch or otherwise lengthen, the tension upon the belt would lessen. Further, for proper operation of the belt drive system, the tension of the belt must be set high enough to accommodate the worst case condition. Such worst case conditions can be the result of extremes of temperature, engine operation, or accessory operation.

There has been interest in making the volume, of the engine compartments of automobiles, smaller. To accommodate the smaller compartments, various aspects of the engines have become smaller, including the accessory belt drive systems. This has been accomplished, at least in part, by reducing the number of belts employed. As each belt is removed, and the number of layers extending from the front of the engine is thereby removed, the total distance the belt drive system extends from the front of the engine is reduced. Ultimately, this has resulted in the use of a single serpentine belt for many applications. A serpentine belt is so named because of the way it snakes around the various pulleys in a series of bends, both forward and backward. A v-ribbed or Micro-V (a registered trademark of The Gates Rubber Company) belt is most suited to serpentine applications.

The limitations of the locked-center approach to belt tensioning are exacerbated in serpentine applications. Accordingly, most modem serpentine belt drives include an automatic tensioner whereby the changing conditions of the belt drive system can be better accommodated. In basic form, an automatic tensioner has a framework or attachment point, which attaches directly to the cylinder block of the engine, or indirectly to some point on the vehicle that is stationary with respect to the engine of the vehicle, and a pulley, which presses upon the belt in the plane of rotation of the belt drive system. A moveable member or connective portion extends between the framework and the pulley to provide pressure upon the belt, via the pulley. The pressure acts to lengthen the distance about which the belt is trained and thereby causes the belt to be in tension. Various techniques and geometries have been employed to provide the biasing force. Commonly, a resilient member, such as a steel spring acts to force the moveable member in rotating motion which results in the pulley tending to move in a direction toward a surface of the belt which, in turn, tends to increase tension upon the belt.

A tensioner with only these elements provides a somewhat constant force upon the surface of the belt when the system is in a resting state (i.e., the pulleys are not rotating). Dimensional instability, of the drive system caused by time, temperature, or manufacturing variation is accommodated fairly well through the action of the resilient member, at least to the limits of the resilient member and geometry of the tensioner. Thus, the tension upon the belt remains relatively constant, when the system is at rest, even though the belt may have stretched or the engine may be hot or cold. However, a tensioner with only these elements may not maintain appropriate tension upon the belt for all operating conditions of the system.

An operating belt drive system typically oscillates due to the influences of torsional vibration or other angular acceleration of the crankshaft or accessories, the influences of unbalanced conditions, or other influences. Torsional vibration of the crankshaft occurs, in part, as a result of the distinct impulses delivered to the crankshaft through the combustion cycles of each cylinder and piston combination. The oscillations lead to vibration of the belt. This, in turn, leads to vibration of the moveable portions of the tensioner. Momentum then builds in those moveable portions modifying the force the pulley exerts upon the belt surface and the tension upon the belt. The changing tension upon the belt can cause unacceptable performance for the belt drive system. In one instance, issues of short-term performance, such as where the belt of the belt drive system slips excessively limiting the system's efficiency or power transmission capability, or is excessively noisy due to slippage or otherwise, can arise. In another instance, the amount of tension necessarily applied to the belt, to have acceptable performance on the short-term, leads to long-term issues such as premature failure of one or more components of the system, including the belt, or one or more accessories.

To accommodate these issues and thus improve the performance of tensioners, damping devices have been included in tensioners. Early damped tensioners have included symmetrical damping where movement of the moveable portions of the tensioners are damped approximately equally whether the instantaneous movement is in the direction tending to increase tension upon the belt or in the direction tending to decrease tension upon the belt. Damping combines with the forces supplied by the resilient member to result in a modified biasing, at the pulley/belt interface. Other tensioners have utilized asymmetrical damping. Commonly, such tensioners are damped such that the damping upon the moveable portion is minimal when the tensioner is moving in the belt tensioning direction and maximal when moving in the belt loosening direction. In one approach, a shoe is biased against a race at an angle different from normal to the surface of the race. As a result, the relative movement of the shoe and race in one direction tends to lift the shoe from the race. This reduces the pressure at their interface, reduces the friction that gives rise to the damping, and thereby reduces the damping. The other direction tends to wedge the shoe against the race and increase the damping. An example is described in U. S. Patent numbered 5,964,674, to Serkh et al. These have involved the use of tensioners having a single pulley biased against a surface of the belt, to supply tension. Further, the biasing against the belt has been solely relative to the engine block.

U. S. Patent numbered 4,416,647 to white, Jr. discloses the use of tensioners with two pulleys pressing upon the power transmission belt. The 647 states that the approach is useful for tensioning a system with a cyclic load such as an air conditioning compressor. One of the pulleys presses upon a span of the power transmission belt immediately upstream of the cyclic load. While, the other pulley presses upon the power transmission belt immediately downstream of the cyclic load. In one embodiment, the two pulleys are fixed relative to each other upon a angled member that can pivot about its apex. The assembly is pressed toward the power transmission belt to supply static tension in a locked-center fashion. The pivot is said to accommodate dynamic tension. Static tension is the result of the force applied to the power transmission belt by the tensioner in the belt tensioning direction with the effect of tending to lengthen the distance the power transmission belt is forced to travel about the pulleys of the system. If it were assumed that each of the pulleys of the system is allowed to rotate freely, tension on every span would be the same and at static tension. Dynamic tension is the tension over the length of the power transmission belt that is the result of static tension as altered by the influences of torque upon each of the pulleys and various imbalances of the system. As an additional result, each span tends to be under differing tension.

In another embodiment, each of the two pulleys is affixed to a separate arm that can move about the pivot, individually. The two arms are biases toward each other by a spring. The '647 patent indicates that either embodiment is damped by the interaction of the pulleys with the separate power transmission belt spans. There is no indication that friction or other damping is introduced at the pivot, whether movement of the pulleys is in relation to the engine or to each other.

Traditionally, an electric starter motor is provided to spin the crankshaft of the engine so that combustion may be initiated and the engine will begin to run. The starter motor is located near the rear of the engine and is adapted to intermittently engage the rear portion of the crankshaft through a gear train.

Currently, there is increasing pressure to reduce emissions and increase fuel economy by lowering the weight of the automobile and reducing the number of under-the-hood components. An approach taken toward these goals involves combining the function of the starter motor and the function of the alternator into a single device, a motor/generator or a Gen-Star. Also toward the goal of increasing fuel economy, the Gen-Star promotes the use of a feature called "stop-in-idle". This feature is where the engine is allowed to die when it would ordinarily idle, then be restarted when the automobile is expected to resume motion. This feature substantially increases the demands placed upon accessory belt drives. In application, the motor/generator is placed in mechanical communication with the crankshaft via the accessory belt drive. The motor/generator and associated accessory belt drive system tends to be placed at the front of the engine. However, placing these systems at other locations, including the rear of the engine is envisioned.

The advent of Gen-Star systems causes the designer, of power transmission belt drive systems, to face substantial new challenges, above mere oscillatory loads. A significant challenge, among these, has been to develop a tensioning system that results in acceptable performance, by an accessory belt drive that includes this new device, which not only offers substantial load and rotational inertia, but also adds large driving torque into the accessory belt drive. Further, it provides this large driving torque on an intermittent basis.

A tensioning system stated to be an approach for tensioning an accessory belt drive incorporating a motor/generator is disclosed in the Japanese publication of application numbered JP1997000359071. In that publication, it is disclosed to place a conventional single arm automatic tensioner against the span of the belt which would become the loosest span at the time the motor/generator is in it start mode, but for the presence of the tensioner. This span corresponds to the span that receives the belt immediately after the belt passes over the motor/generator pulley, when the belt is moving in its normal operating direction.

The disclosed tensioning system has been identified as less than optimal. To achieve acceptable performance in the short-term, both long-term performance must be sacrificed and the width of the belt that must be used to achieve adequate short-term performance is other than optimal.

U. S. Patent numbered 4,758,208 to Bartos et al., discloses the use of two arms, each carrying a pulley. The arms are mounted with pivot points that correspond with the shaft of a Gen-Star. The two arms are biased toward each other by a spring. The tensioner also includes having the Gen-Star mounted in a limited rotatable fashion such that the housing is allowed to rotate a few degrees in reaction to whether the Gen-Star mode is of operating as a starter or an alternator. This reactive movement operates a pair of latches, which alternatingly lock one or the other of the two arms against movement, depending upon mode. In this manner, the arm associated with the power transmission belt span terminating at the Gen-Star pulley with the greatest tension, as a result of the Gen-Star mode, is locked in place. The free arm then supplies tension to the power transmission belt system. This tensioner is apparently complex, requires special mounting of the Gen-Start having moving parts subject to wear, and is not flexible in its application. Further, the '208 patent does not disclose the contemplation of adding damping to the movement of either pulley to enhance system performance.

Accordingly, there remains the need for a tensioner and system, for use in conjunction with a Gen-Star that provides, at once, adequate short-term performance, adequate long-term performance, optimizes the width of the belt that may be used for any given application, contains cost and complexity and is flexible according to the Gen-Star systems to which it can be applied.

DE 198 49 659 as the closest prior art describes a tensioning device that acts on two strands of a traction element, such as a flexible belt, that have different traction forces, that pre-tensions the strands by only one tensioner and in which in which the tension forces are said to adapt to the differing traction forces. Pivoting levers of the tensioning device are formed by lever arms, one inner lever arm and one outer lever arm, that extend from the fulcrum of each pivoting lever. The free end of the outer lever arm of each pivoting lever is connected to a tension roller. The free end of the inner lever arm of each pivoting lever is articulated on one end of the tensioner-damper unit. The tensioner-damper unit is not stationary i.e., it is only secured between the inner lever arms and transmits, with a damping effect, the reaction forces occurring during the tensioning operation between the first and the second strand. The lengths of the inner and the outer lever arms of each pivoting lever are configured in a defined ratio to each other. This length ratio is different for each of the pivoting levers. It is matched to the required tensioning forces, that differ from strand to strand, for tensioning each strand. Since each pivoting lever is pivoted on its pivot about a stationary axis, the tensioning force of the tensioner is transmitted to the tension element and thus to the strand concerned, with a lever action corresponding to this ratio. This ratio determines whether the tensioning force of the tensioner is decreased or increased by the pivoting lever before transmission to the tension element. The different specific ratios of the lengths of the pivoting levers form a common system of levers in the tensioning device. This lever system changes its leverage in keeping with the reaction forces transmitted from one strand to the other.

The advantage of such a tensioning device is said to be that the tensioning forces can be differently defined from strand to strand, a variation of the tensioning forces is possible by replacing the pivoting levers with pivoting levers having a different length ratio, only one tensioner-damper unit is required, tensioning devices having different tensioning and damping characteristics can be designed by any suitable combination of tensioner-damper units and pivoting levers and the traction element is pre-tensioned in accordance with its mode of operation only so far as required by the transmission of power and is thus freed of unnecessary wear.

### Summary of the Invention

The present invention has as an object the provision of an accessory belt drive tensioner and system of a configuration that improves the combination of short-term performance, long-term performance, and optimizes belt selection.

The present invention has as an additional object the provision of an accessory belt drive tensioner and system of a configuration that contains cost and complexity and is flexible according to the Gen-Star systems to which it can be applied.

To achieve the foregoing and other objects the present invention is defined by the features of claim 1.

### Brief Description of the Drawings

The accompanying drawings, which are incorporated in and form part of the specification in which like numerals designate like parts, illustrate preferred embodiments of the present invention and together with the description, serve to explain the principles of the invention. In the drawings:
Figure 1 is a schematic representation of a preferred embodiment of an accessory belt drive system configuration including a motor/generator with the system in the generate mode.
Figure 2 is a schematic representation of a preferred embodiment of an accessory belt drive system configuration including a motor/generator with the system in the start mode.
Figure 3 is a perspective view of a tensioner forming part of a preferred accessory belt drive system including a motor/generator.
Figure 4 is a perspective view of a tensioner forming part of a preferred accessory belt drive system including a motor/generator with portions cut away.
Figure 5 is a section from Figure. 3 taken along line 5 - 5.
Figure 6 is a plan view of a tensioner forming part of a preferred accessory belt drive system including a motor/generator.
Figure 7 is a section from Figure 4 taken along line 7 - 7.

### Detailed description of the Preferred Embodiments

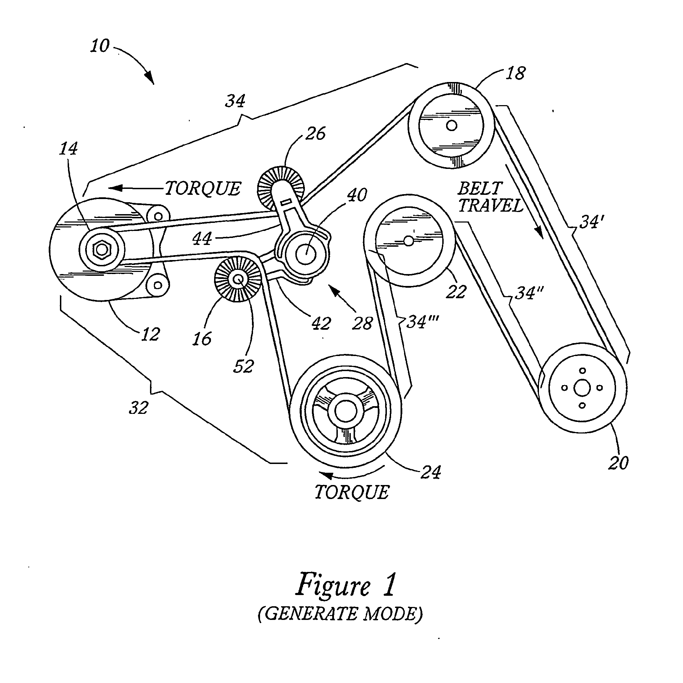

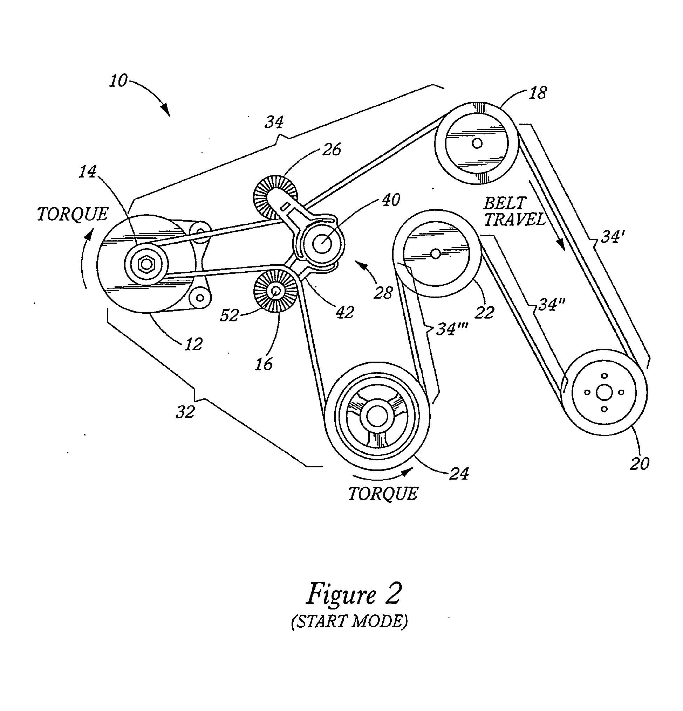

A preferred embodiment of an accessory belt drive system 10 is depicted in Figures 1 and 2. It includes motor/generator 12, motor/generator pulley 14, power steering pump pulley 18, air conditioning compressor pulley 20, water pump pulley 22, crankshaft pulley 24, dual tensioner 28, first tensioner pulley 16, second tensioner pulley 26, and power transmission belt 30.

While specific accessory pulleys in a specific geometrical arrangement are depicted, it should be recognized that the instant invention applies to various numbers and combinations of accessories and geometrical arrangements, including both serpentine and non-serpentine configurations, depending upon application. The configuration depicted is serpentine. Thus, power transmission belt 30 would ordinarily be of the v-ribbed type. However, the invention can be practiced with the inclusion of all belt types. Further, this depiction also can be viewed as one plane of belt/pulleys in an accessory belt drive system having multiple belts.

The arrow labeled "belt travel" indicates direction of belt travel during normal operation in both generate and start modes. To move downstream, along the path trained by power transmission belt 30, is to move in the same direction as belt travel. To move upstream is to move in the opposite direction of belt travel.

Moving downstream starting at crankshaft pulley 24, a crankshaft-to-motor/generator span 32 covers the distance beginning with a termination at the last point of contact between crankshaft pulley 24 and power transmission belt 30, and ending with a termination at the first point of contact between motor/generator pulley 14 and power transmission belt 30. A first motor/generator-to-crankshaft span 34 covers the distance beginning at the last point of contact between motor/generator pulley 14 and power transmission belt 30 and ending at the first point of contact of power steering pump pulley 18 and power transmission belt 30. In the depiction of Figures 1 and 2, there are three more motor/generator-to-crankshaft spans 34', 34", and 34''', respectively. The number and placement of crankshaft-to-motor/generator spans 32 and motor/generator-to-crankshaft spans 34 are dependent upon the number and placement of accessory pulleys for a particular application.

The direction of torque at motor/generator pulley 14 and at crankshaft pulley 24 reverses depending upon the mode of operation of accessory belt drive system 10, as depicted by the arrows labeled "torque" at each pulley 14 and 24, in figures 1 and 2, respectively. In the generate mode, crankshaft pulley 24 supplies all driving torque. Water pump pulley 22, air conditioning compressor pulley 20, power steering pump pulley 18, and motor/generator pulley 14 consume the driving torque, with minor consumption by first tensioner pulley 16 and second tensioner pulley 26. In start mode, motor/generator pulley 14 supplies all driving torque. Crankshaft pulley 24, water pump pulley 22, air conditioning compressor pulley 20, and power steering pump pulley 18 consume the driving torque, with minor consumption by first tensioner pulley 16 and second tensioner pulley 26.

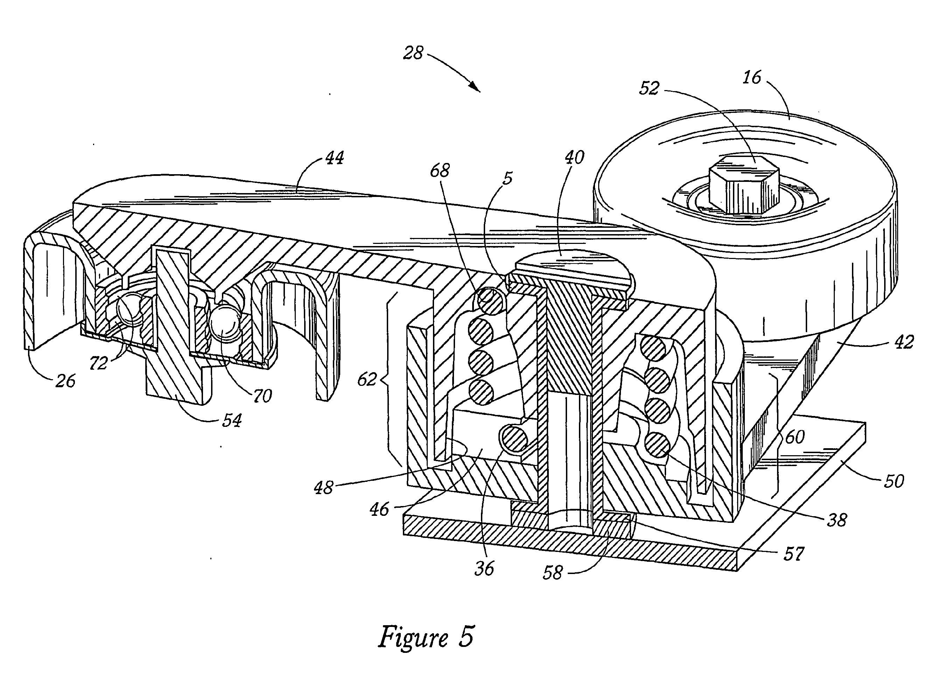

Generally and regardless of mode of operation, if it were assumed that each of the pulleys is allowed to rotate freely, tension on every span would be the same and at static tension. Referring to figures 1 through 6, for this preferred embodiment, static tension is the result of the force applied to power transmission belt 30 by tensioner 28 through the resilient member 38 acting upon the combination of first connective arm 42 and second connective arm 44 causing first tensioner pulley 16 and second tensioner pulley 26 to be biased toward each other, or mutually biased, and pressing upon the combination of crankshaft-to-motor/generator span 32 and motor/generator-to-crankshaft span 34, which in turn tends to lengthen the distance power transmission belt 30 is forced to travel about all of the pulleys.

In the conventional or generate mode, depicted in figure 1, crankshaft pulley 24 supplies the driving torque. Last motor/generator-to-crankshaft span 34''' becomes the span with the greatest tension. Each pulley upstream of crankshaft pulley 24 absorbs a portion of the driving torque and, ignoring the affects of the tensioner, causes the tension in the immediately upstream span to be reduced. Motor/generator pulley 14 presents the greatest load. Ultimately, crankshaft-to-motor/generator span 32 becomes the span with the least tension.

In the start mode, depicted in figure 2, motor/generator 12 supplies the driving torque. Crankshaft-to-motor/generator span 32 becomes the span with the greatest tension. Motor/generator-to-crankshaft span 34 becomes the span with the least tension. Unlike the generate mode, crankshaft pulley 24 presents the greatest load. Traditionally, optimization is viewed as a function of sequencing the various loads and placement of the tensioner, of the drive layout. As can be seen, a layout that optimizes in the generate mode is substantially different from a layout that optimizes in the start mode.

In the conventional accessory v-ribbed belt drive system, the fundamental design considerations are: 1) belt width (commonly denoted by number of ribs) and type selection related to torque anticipated to be supplied and consumed; and, 2) static tension selection to be below that which stresses either the belt or components of the system to the point of reducing the useful life of either below an acceptable term and above the point where unacceptable slippage begins. Further, belt type and width selection affects useful belt life. Also, there is interplay between these two fundamental design considerations.

A constant goal for the accessory belt drive system designer is to optimize both of these considerations, in light of cost and complexity concerns. Optimization is accomplished through manipulation of many geometric and material parameters known to those of ordinary skill in the art. Among these is arrangement of the driving and driven pulleys based upon inertial or other torque each presents.

Drive systems that include a motor/generator never allow this particular optimization, present new and difficult limitations, and heretofore have alluded practical optimization. The root of the difficulties lies in the fact that the pulleys which supply the driving torque and present the greatest inertial torque are different depending upon mode of operation. Further, larger inertial torque loads are presented than normally encountered in a conventional drive system.

The mutually biased twin pulley tensioner 28 of the instant invention significantly optimizes accessory belt drive system 10 in certain applications for the combination of modes, particularly when used in the layout of the preferred embodiment.

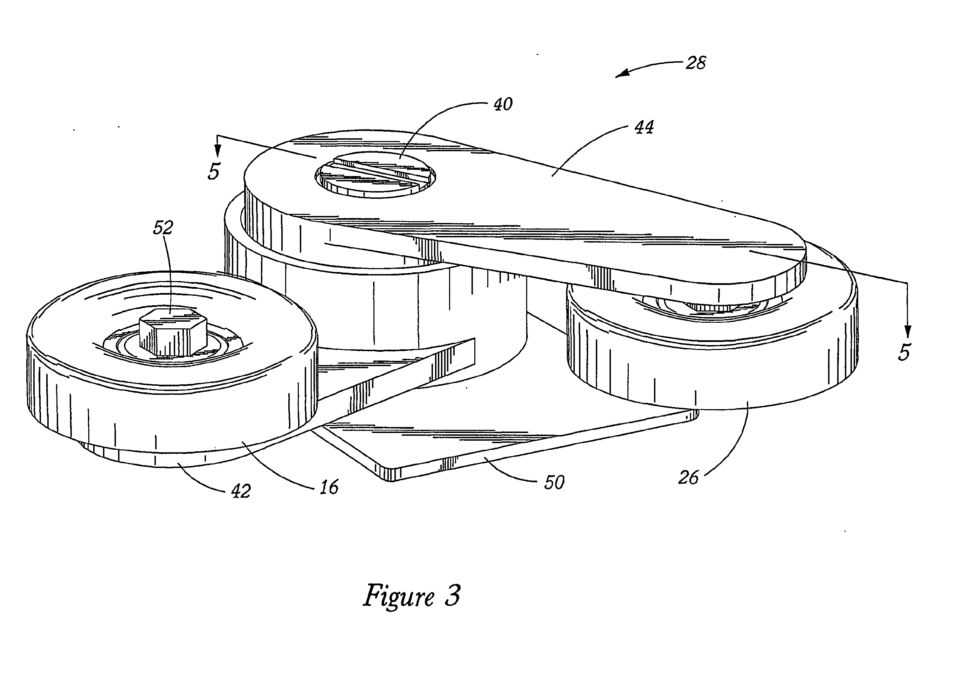

Referring to Figures 3 through 6, tensioner 28 comprises first tensioner pulley 16, second tensioner pulley 26, resilient member 38, pivot bolt 40, first connective arm 42 and second connective arm 44, damper shoe 46, damper race 48, mounting plate 50, first pulley bolt 52, second pulley bolt 54, bushing 56, washer 57, pivot post 58, first arm hub 60, and second arm hub 62. First and second pulleys 16 and 26 are journaled upon first and second connective arms 42 and 44, respectively, by ball bearing assemblies. The ball bearing assemblies comprise bearings 70 and races 72.

Both first and second connective arms 42 and 44, respectively, are rotatably journaled upon pivot post 58, supported by bushing 56 and washer 57. First arm hub 60 and second arm hub 62 meet bushing 56 and washer 57, which in turn meet pivot post 58 and pivot bolt 40. It is contemplated each may have a fit giving rise to a significant amount of friction. Such friction would add damping to each first and second connective arms 42 and 44, respectively, in relation to mounting base 50, which is affixed upon a point stationary in relation to the cylinder block of the engine (not depicted).

While first and second connective arms 42 and 44 are rotatable relative to mounting base, they are not rotatable relative to each other. Rather, they are biased toward each other because of the force imparted to them by resilient member 38, as modified by the damping mechanism comprising damping shoe 46 riding upon damping race 48 formed on the inside surface of second arm hub 62. The friction supplied by the interface of damping shoe 46 and damping race 48 damp the movements of first and second connective arms 42 and 44, but only relative to each other.

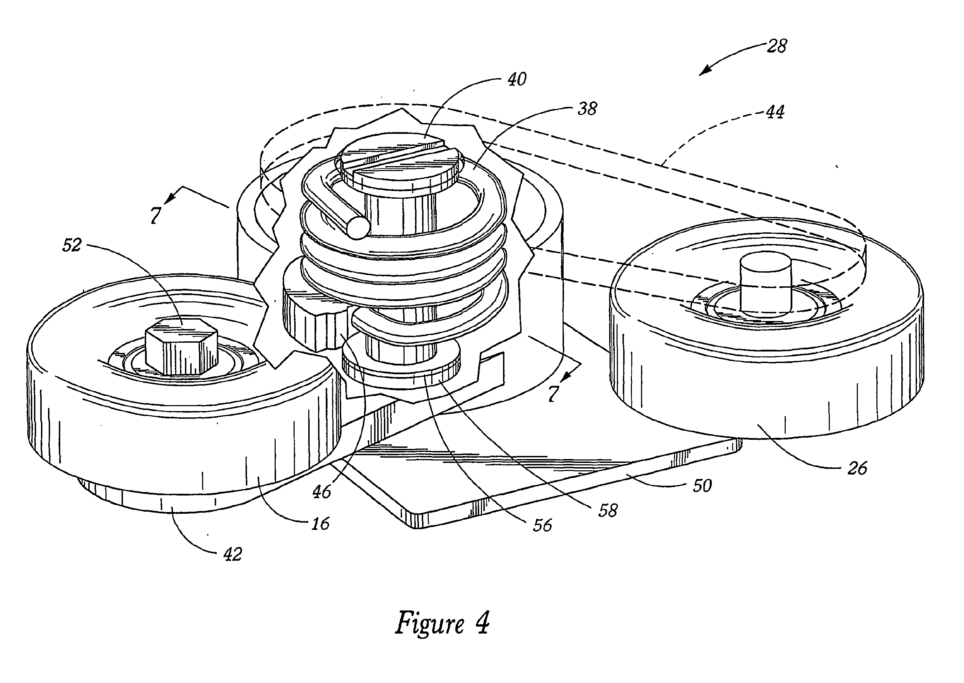

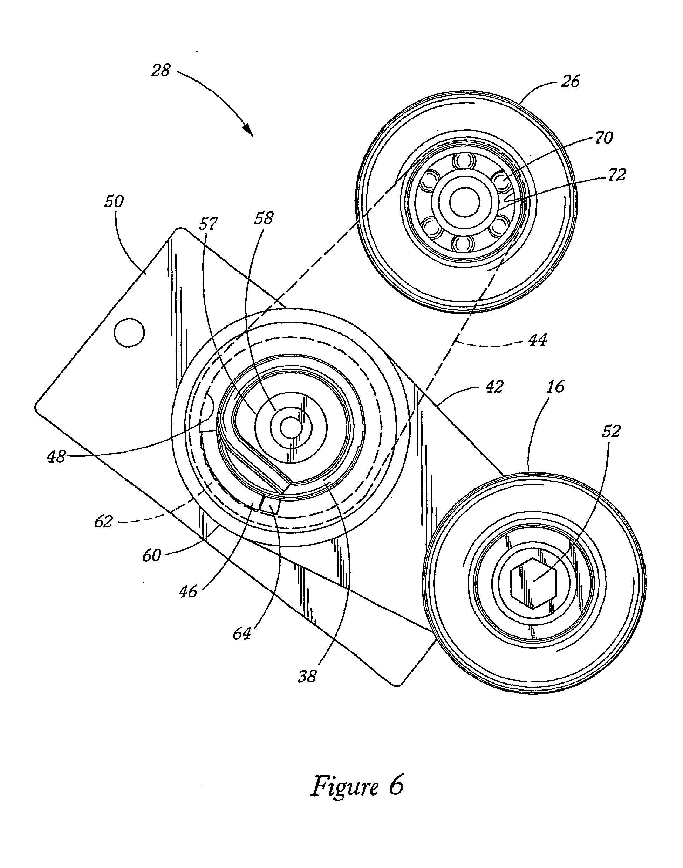

Resilient member38, in this preferred embodiment a steel torsion spring, attaches indirectly to first connective arm 42 via damper shoe 46 and damper shoe abutment 64 at damping shoe spring attachment point 66, and directly to second connective arm 44 at second arm spring attachment point 68. Resilient member 38 is wound to impart a torque to second connective arm 44 in a clockwise direction as viewed in figure 4 and to damping shoe 46 in a counter clockwise direction, as viewed in Figure 6. The counter clockwise torque felt by damping shoe 46 is communicated to damper shoe abutment 64 and thus to first connective arm 42 to which damper shoe abutment 64 is attached.

For this preferred embodiment, any damping supplied relative to mounting plate 50, by the close fit of first arm hub 60, second arm hub 62, bushing 56, washer 57, pivot post 58 and pivot bolt 40, is symmetrical. A close fit of this type would also add a symmetrical biasing component to the damping of first connective arm 42 relative to second connective arm 44. It should be recognized that even symmetrical damping results in asymmetrical biasing, as damping forces add to overall biasing forces upon one direction of movement and subtract in the other direction.

The damping supplied between first and second connective arms 42 and 44 has an asymmetrical component such that the combined movement of first and second pulleys 16 and 26 is more damped when moving away from each other than when moving toward each other direction. This is true regardless of whether first or second pulley 16 and 26 is moving in the belt tensioning or loosening directions. The belt loosening direction, when referring to each first or second pulley 16 or 26 individually, is that direction, of either first or second pulley 16 or 26, that tends to allow belt 30 to be trained about a shorter path. The belt tensioning is simply the converse. However, when referring to the movement of first and second pulleys 16 and 26, the belt loosening direction is when first and second pulleys 16 and 26 move farther apart. Once again, belt tensioning is simply the converse.

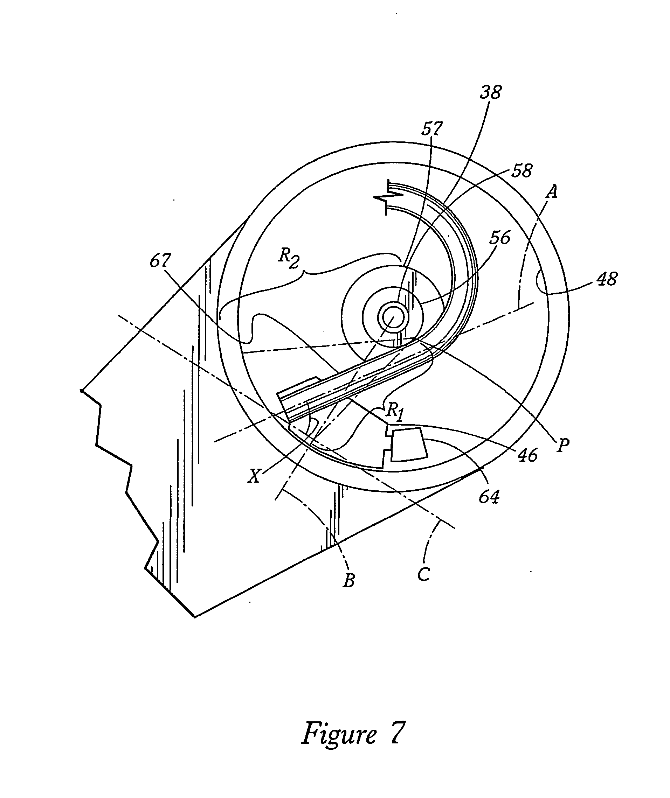

Referring to Figure 7, shoe spring tang 67 has a bending axis A. Bisecting radius B extends from the center of pivot post 58 through the midpoint of contact between damper shoe 46 and damper race 48. Cord line C is normal to bisecting radius B and meets the two extreme points of contact between damper shoe 46 and damper race 48. As can be seen, bending axis A intersects with cord line C with an angle X, and is thus not parallel with cord line C. The distance, from the point of contact between shoe spring tang 67 and pivot post 58, designated as pivot point P, to the midpoint of contact between damper shoe 46 and damper race 48 is fixed distance R₁. Angle X gives rise to the asymmetry of damping, as between first and second connective arms 42 and 44. At rest, shoe spring tang 67 and damper shoe 46 extend the fixed distance R₁ equal to fill distance R₂, thus contacting damper race 48 with the full force provided by resilient member 38.

When first and second pulleys 16 and 26 move toward each other, the belt tensioning direction, damper race 48 moves clockwise in relation to first connective arm 42. This, in turn, tends to move damper shoe 46 and shoe spring tang 67 in a clockwise direction about pivot point P. This causes fill distance R₂ to tend to move correspondingly clockwise. As can be seen, this causes fill distance R₂ to tend to become larger. However, fixed distance R₁ cannot become larger. Thus, damper shoe 46 tends to lift from damper race 48, absorbing some of the force otherwise provided by resilient member 38. Friction at the surfaces of damper shoe 46 and damper race 48 is reduced leading to reduced damping in the belt tensioning direction.

When first and second pulleys 16 and 26 move away from each other, the belt loosening direction, damper race 48 moves counter clockwise in relation to first connective arm 42. This, in turn, tends to move damper shoe 46 and shoe spring tang 67 in a counter clockwise direction about pivot point P. This causes fill distance R₂ to tend to move correspondingly counter clockwise. As can be seen, this causes fill distance R₂ to tend to become smaller. However, fixed distance R₁ cannot become smaller. Thus, damper shoe 46 tends to press upon damper race 48, adding to the force provided by resilient member 38. Friction at the surfaces of damper shoe 46 and damper race 48 is increased leading to increased damping in the belt tensioning direction.

As discussed above, when the systems operation changes from the static condition to the generate mode, all crankshaft-to-motor/generator spans 34, 34', 34", and 34 "' take-on greater tension than motor/generator-to-crankshaft span 32. Thus, the force tending to straighten crankshaft-to-motor/generator span 34 is greater than the force tending to straighten motor/generator-to-crankshaft span 32. In the preferred embodiment depicted in figure 1, this tends to force second connective arm 44 and associated second tensioner pulley 26 to a position that allows power transmission belt 30 at crankshaft-to-motor/generator span 34 to take the shortest possible path. As depicted, this equates with second connective arm 44 assuming a position essentially perpendicular to a straightened power transmission belt 30 at crankshaft-to-motor/generator span 34. This particular geometry causes second tensioner pulley 26 to reach the limit of its travel in the belt loosening direction while still deflecting power transmission belt 30 and is the most preferred. However, it is also contemplated that, in a lesser-preferred embodiment, the rotation of second connective arm 44 about main pivot 40 can be limited by the placement of stops. It is also contemplated, however, that placement of main pivot 40 in conjunction with the length of second connective arm 44 can be such that crankshaft-to-motor/generator span 34 can become straight without second tensioner pulley 26 reaching the end of its travel. In any of these events, power transmission belt 30 will have reached the shortest available path at crankshaft-to-motor/generator span 34.

If this repositioning at crankshaft-to-motor/generator span 34 were to occur without another corresponding event, static tension on belt drive system 10 would be reduced. However, rotation of second connective arm 44 about main pivot 40 places stress upon resilient member 38, which in turn, increases the biasing force upon first connective arm 42. This causes a commensurate increase in the tensioning force produced by first tensioner pulley 16 upon power transmission belt 30 at motor/generator-to-crankshaft span 32. Accordingly, static tension upon power transmission belt 30 remains largely unaltered by the switch of modes of operation from static, or non-running, to generate. The analysis is the same for a switch in modes from start to generate.

When switching from generate to start modes, the converse is true. That is, first tension pulley 16 reaches the limit of its travel in the loosening direction. Tensioning force upon second tensioning pulley 26 is increased. Static tension upon power transmission belt 30 remains largely unaltered.

The present invention found in the described embodiments accomplishes significant optimization of long-term and short-term performance and belt selection while, at the same time, substantially minimizing cost and complexity and allowing improved flexibility according to the Gen-Star systems to which it can be applied.

## Claims

1. A belt drive system
- having a belt tensioner (28), a crankshaft pulley (24), an accessory pulley (18,20,22), a motor/generator pulley (14), and a power transmission belt (30) trained about said crankshaft pulley, said accessory pulley, and said motor/generator pulley,
- said belt tensioner (28) being of the type including an attachment point (40) adapted to be affixed to a stationary point relative to a cylinder block of an engine, a first belt tensioner pulley (16), a biasing member (38), and a connective portion (42,44) adapted to communicate a force from said biasing member (38) to said power transmission belt via said first belt tensioner pulley (16),
- said tensioner including a second tensioner pulley (26),
- said connective portion (42,44) adapted to communicate said force from said biasing member (38) to said first tensioner pulley (16) and to said second tensioner pulley (26), mutually asymmetrically biasing said first tensioner pulley (16) and said second tensioner pulley (26) toward movement tending to increase tension upon said power transmission belt,
**characterised by**:
- said asymmetrical biasing being
-- that biasing at a level that is no more than that provided by spring rate biasing, when external forces acting upon said first belt tensioner pulley (16) and said second belt tensioner pulley (26) are less than necessary to overcome said spring rate biasing level and would thereby tend to cause a combination of said first belt tensioner pulley and said second belt tensioner pulley to move toward increasing belt tension, and
-- that biasing of a level that results from said spring rate biasing and direction reversal resistance, when said external forces acting upon said first belt tensioner pulley (16) and said second belt tensioner pulley (26) are greater than that necessary to overcome said spring rate biasing level and would thereby tend to cause said combination of said first belt tensioner pulley and said second belt tensioner pulley to move toward decreasing belt tension,
- said direction reversal resistance results from a damping factor responding to movement of said combination of said first belt tensioner pulley (16) and said second belt tensioner pulley (26) toward decreasing belt tension,
- and said damping factor being asymmetrical.

2. The tensioner of claim 1, further comprising:
said tensioner having a pivot,
said connective portion having a first arm (42) extending from a first connection at and pivoting around said pivot to a connection at said first tensioner pulley (16) and a second arm (44) extending from a second connection at and pivoting around said pivot to a connection at said second tensioner pulley (26), and
said biasing member being in mechanical communication with said first arm and with said second arm, mutually biasing said first arm and said second arm toward movement tending to increase tension upon said power transmission belt.

3. The tensioner of claim 1, wherein said movement tending to increase tension upon said power transmission belt being movement toward reduced displacement of said first tensioner pulley in relation to said second tensioner pulley.

## Patentansprüche

1. Riementriebsystem
- mit einem Riemenspanner (28), einer Kurbelwellenriemenscheibe (24), einer Zusatzriemenscheibe (18, 20, 22), einer Motor-/ Generatorriemenscheibe (14), und einem Kraftübertragungsriemen (30), der um die Kurbelwellenriemenscheibe, die Zusatzriemenscheibe und die Motor/Generatorriemenscheibe geführt ist,
- wobei der Riemenspanner (28) von dem Typ ist, der aufweist: einen Befestigungspunkt (40), der zur Befestigung an einem stationären Punkt in bezug auf einen Zylinderblock eines Motors ausgebildet ist, eine erste Riemenspannscheibe (16), ein Vorspannelement (38) und einen Verbindungsbereich (42, 44), der derart ausgebildet ist, dass er eine Kraft von dem Vorspannelement (38) über die erste Riemenspannscheibe (16) an den Kraftübertragungsriemen überträgt,
- wobei der Spanner eine zweite Riemenspannscheibe (26) aufweist,
- wobei der Verbindungsbereich (42, 44) derart ausgebildet ist, dass er die Kraft von dem Vorspannelement (38) an die erste Riemenspannscheibe (16) und die zweite Riemenspannscheibe (26) überträgt, die erste Riemenspannscheibe (16) und die zweite Riemenspannscheibe (26) gegenseitig asymmetrisch in eine Bewegungsrichtung vorspannt, in der die Spannung des Kraftübertragungsriemens erhöht wird,
**dadurch gekennzeichnet, dass**
- die asymmetrische Vorspannung
- die Vorspannung mit einem Maß ist, das nicht größer als das durch die Federzahlvorspannung bewirkte Maß ist, wenn auf die erste Riemenspannscheibe (16) und die zweite Riemenspannscheibe (26) einwirkende externe Kräfte geringer sind, als zum Überwinden des Maßes der Federzahlvorspannung erforderlich, und daher bestrebt sind, eine Kombination aus der ersten Riemenspannscheibe und der zweiten Riemenspannscheibe in Richtung der Erhöhung der Riemenspannung zu bewegen, und
- die Vorspannung mit einem Maß ist, das sich aus der Federratenvorspannung und dem Richtungsumkehrwiderstand ergibt, wenn die auf die erste Riemenspannscheibe (16) und die zweite Riemenspannscheibe (26) wirkenden externen Kräfte größer als zum Überwinden des Maßes der Federratenvorspannung erforderlich sind und daher bestrebt sind, die Kombination aus der ersten Riemenspannscheibe und der zweiten Riemenspannscheibe in Richtung der Verringerung der Riemenspannung zu bewegen,
- wobei der Richtungsumkehrwiderstand aus einem Dämpfungsfaktor resultiert, welcher eine Folge der Bewegung der Kombination der ersten Riemenspannscheibe (16) und der zweiten Riemenspannscheibe (26) in Richtung der Verringerung der Riemenspannung ist,
- und wobei der Dämpfungsfaktor asymmetrisch ist.

2. Spanner nach Anspruch 1, bei welchem ferner
der Spanner einen Drehzapfen aufweist;
der Verbindungsbereich einen ersten Arm (42), der sich von einer ersten Verbindung an dem Drehzapfen und um den Drehzapfen schwenkend zu einer Verbindung an der ersten Riemenspannscheibe (16) erstreckt, und einen zweiten Arm (44) aufweist, der sich von einer zweiten Verbindung an dem Drehzapfen und um den Drehzapfen schwenkend zu einer Verbindung an der zweiten Riemenspannscheibe (26) erstreckt, und
- das Vorspannelement in mechanischer Verbindung mit dem ersten und dem zweiten Arm steht, wobei sie den ersten Arm und den zweiten Arm gegenseitig asymmetrisch in eine Bewegungsrichtung vorspannt, in der die Spannung des Kraftübertragungsriemens erhöht wird.

3. Spanner nach Anspruch 1, bei dem die Bewegung zur Erhöhung der Spannung des Kraftübertragungsriemens eine Bewegung in Richtung einer geringeren Verschiebung der ersten Riemenspannscheibe in bezug auf die zweite Riemenspannscheibe ist.

## Revendications

1. Système d'entraînement à courroie
- ayant un tendeur (28) de courroie, une poulie (24) de vilebrequin, une poulie (18, 20, 22) d'accessoire, une poulie (14) de moteur/génératrice et une courroie (30) de transmission de puissance entraînée autour de ladite poulie de vilebrequin, de ladite poulie d'accessoire et de ladite poulie de moteur/génératrice,
- ledit tendeur (28) de courroie étant du type comprenant un point d'attache (40) conçu pour être fixé à un point fixe par rapport à un bloc-cylindres d'un moteur, une première poulie (16) de tension de courroie, un élément de rappel (38) et une partie de liaison (42, 44) conçue pour communiquer une force depuis ledit élément de rappel (38) à ladite courroie de transmission de puissance en passant par ladite première poulie (16) de tension de la courroie,
- ledit tendeur comprenant une seconde poulie (26) de tension,
- ladite partie de liaison (42, 44) étant conçue pour communiquer ladite force dudit élément de rappel (38) à ladite première poulie (16) de tension et à ladite seconde poulie (26) de tension, rappelant de façon mutuellement asymétrique ladite première poulie (16) de tension et ladite seconde poulie (26) de tension vers un mouvement tendant à augmenter la tension sur ladite courroie de transmission de puissance,
**caractérisé par le fait que** :
- ledit rappel asymétrique étant
- ce rappel à un niveau qui n'est pas supérieur à celui produit par un rappel par la flexibilité d'un ressort, lorsque des forces extérieures agissant sur ladite première poulie (16) de tension de la courroie et ladite seconde poulie (26) de tension de la courroie sont inférieures à celles nécessaires pour vaincre ledit niveau de rappel par la flexibilité d'un ressort et tendraient ainsi à amener une combinaison de ladite première poulie de tension de la courroie et de ladite seconde poulie de tension de la courroie à se déplacer dans le sens d'un accroissement de la tension de la courroie, et
- ce rappel d'un niveau qui résulte dudit rappel par la flexibilité d'un ressort et d'une résistance d'inversion de sens lorsque lesdites forces extérieures agissant sur ladite première poulie (16) de tension de la courroie et ladite seconde poulie (26) de tension de la courroie sont supérieures à celles nécessaires pour surmonter ledit niveau de rappel par la flexibilité d'un ressort et tendraient ainsi à amener ladite combinaison de ladite première poulie de tension de la courroie et de ladite seconde poulie de tension de la courroie à se déplacer dans un sens diminuant la tension de la courroie,
- ladite résistance d'inversion de sens résulte d'un facteur d'amortissement répondant à un mouvement de ladite combinaison de ladite première poulie (16) de tension de la courroie et de ladite seconde poulie (26) de tension de la courroie dans le sens d'une diminution de la tension de la courroie,
- et ledit facteur d'amortissement est asymétrique.

2. Tendeur de la revendication 1, comportant en outre :
le fait que ledit tendeur comporte un pivot,
ladite partie de liaison ayant un premier bras (42) s'étendant depuis une première liaison audit pivot et pivotant autour de celui-ci jusqu'à une liaison à ladite première poulie (16) de tension, et un second bras (44) s'étendant depuis une seconde liaison audit pivot et pivotant autour de celui-ci jusqu'à une liaison à ladite seconde poulie (26) de tension, et
ledit élément de rappel étant en communication mécanique avec ledit premier bras et avec ledit second bras, rappelant mutuellement ledit premier bras et ledit second bras vers un mouvement tendant à augmenter la tension sur ladite courroie de transmission de puissance.

3. Tendeur selon la revendication 1, dans lequel ledit mouvement tendant à augmenter la tension sur ladite courroie de transmission de puissance est un mouvement vers un déplacement réduit de ladite première poulie de tension par rapport à ladite seconde poulie de tension.
